(19) **Europäisches Patentamt**
**European Patent Office**
**Office européen des brevets**

(11) **EP 4 764 892 A1**

(12) **EUROPEAN PATENT APPLICATION**

(43) Date of publication:
24.06.2026 Bulletin 2026/26

(21) Application number: 24222265.1

(22) Date of filing: 20.12.2024

(51) International Patent Classification (IPC):
**G06F 16/435** (2019.01)    **G06F 16/45** (2019.01)

(52) Cooperative Patent Classification (CPC):
**G06F 16/45; G06F 16/435**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nagravision Sarl
1033 Cheseaux-sur-Lausanne (CH)**

(72) Inventors:
• **Berkes, Pietro
1033 Cheseuax-sur-Lausanne (CH)**
• **Marty, Renaud
1033 Cheseuax-sur-Lausanne (CH)**

(74) Representative: **Parker, Andrew James
Meissner Bolte Partnerschaft mbB
Patentanwälte Rechtsanwälte
Postfach 86 06 24
81633 München (DE)**

(54) **CONTROLLING UPLOAD OF MEDIA CONTENT**

(57)    A computer-implemented method of controlling the upload of media content comprises: generating a fingerprint, based on received media content, by applying a trained fingerprint generation neural network to the media content, the trained fingerprint generation neural network comprising: an encoder configured to generate an embedding of the media content, the encoder comprising a plurality of encoder layers, each comprising a respective plurality of nodes taking respective values; and one or more additional layers, the one or more additional layers comprising the embedding, each additional layer of the one or more additional layers comprising a respective plurality of nodes taking respective values, wherein the fingerprint comprises a vector comprising the values of a plurality of nodes from the one or more additional layers; accessing a database of reference fingerprints, each reference fingerprint generated based on a respective item of media content; determining whether the generated fingerprint meets a similarity criterion, wherein meeting the similarity criterion is indicative of the generated fingerprint being similar to one or more of the reference fingerprints; and in response to a determination that the generated fingerprint meets the similarity criterion, generating an alert and/or preventing upload of the media content to an upload platform. Corresponding system, platforms, computer programs and computer program products are also provided.

FIG. 2

**Description**

TECHNICAL FIELD OF THE INVENTION

The present invention relates to a computer-implemented method of controlling the upload of media content, e.g. to an upload platform, as well as a corresponding system or platform, and computer-program.

BACKGROUND TO THE INVENTION

General artificial intelligence is increasingly being used to generate vast quantities of media content, including images, music, and videos. In order to generate this content, the artificial intelligence models used to create the content must be trained on vast quantities of training data, which is usually scraped from the internet. Much of the data used to train the generative artificial intelligence models has therefore been created, in the traditional sense, by content creators, who in many cases have not consented to the use of their creations for training the general artificial intelligence models. This means that media content created using generative artificial intelligence models may be trained on data to which external users are not permitted to use to create content, e.g. due to copyright existing in the media content, or due to other access rights.

At present, users are able to upload media content generated by generative artificial intelligence e.g. to their social media accounts, and other file sharing platforms largely unchecked. There are some systems, such as YouTube's Content ID check, which scans videos uploaded to YouTube against a database of audio and visual content which is submitted to the platform by the copyright holders of that audio and visual content, to ensure that other users are not uploading e.g. films or television programmes to YouTube without authorization. However, this check only ensures that the content is not identical to existing media content.

Media content created using generative artificial intelligence, however, is rarely identical to the media content on which the models were trained, since those models generally learn how to reproduce something which is conceptually similar to the original content. This presents difficulties in checking whether uploaded content is potentially generated based on e.g. copyrighted material, or other material which the uploader is not permitted to access or use.

It is an object of the present invention addresses these issues.

SUMMARY OF THE INVENTION

Broadly, the present invention provides a computer-implemented method of controlling upload of media content to e.g. a social media platform in which fingerprints are extracted from the media content. The fingerprints can for instance be extracted by applying a trained machine-learning model such as a neural network. As used herein, the term "fingerprint" may refer to an image identifier which is recognizable for the machine-learning model. Preferably, the fingerprint is a combination of a plurality of numerical values, where each numerical value identifies at least a portion of the image. For instance, a fingerprint may be a vector with a number of elements equal to the number of neurons in an intermediate layer.

The machine-learning model may be configured to further compare extracted fingerprints with reference fingerprints. The reference fingerprints may correspond e.g. to media content, the copying of which is not permitted. If it is determined that the generated fingerprints are "too similar" (e.g. based on the value of a similarity metric, or the like) to any of the reference fingerprints, an alert may be generated.

The reference fingerprints may be stored in a database. The database may be located on one or a plurality of servers, preferably accessible in a cloud network or on a cloud computing server. The database may also be referred to a "codebook". The codebook may contain reference fingerprints in the form of a vector database mapping fingerprints to copyrighted or restricted media data. The codebook thus contains fingerprints of restricted media with metadata or identifiers specifying different access restriction levels. The codebook database may be constructed by receiving media data from one or a plurality of media content databases. The restrictions level may include categories such as "free", "available against payment or subscription", or "forbidden". Optionally, the codebook server may comprise a memory containing a fingerprinting program. The fingerprinting program is configured to apply a machine-learning process, in which an encoder analyses images and metadata and provides a numerical representation of a media content.

More specifically, a first aspect of the present invention may provide a computer-implemented method of controlling the upload of media content, the computer-implemented method comprising: generating a fingerprint, based on received media content, by applying a trained fingerprint generation neural network to the media content, the trained fingerprint generation neural network comprising: an encoder configured to generate an embedding of the media content, the encoder comprising a plurality of encoder layers, each comprising a respective plurality of nodes taking respective values; and one or more additional layers, the one or more additional layers comprising the embedding, each additional layer of the one or more additional layers comprising a respective plurality of nodes taking respective values, wherein the fingerprint comprises a vector comprising the values of a plurality of nodes from the one or more additional layers; accessing a database of reference fingerprints, each reference fingerprint generated based on a respective item of media content; determining whether the generated fingerprint meets a similarity criterion, wherein meeting the similarity criterion is indicative of the generated fingerprint being similar to one or more of the reference fingerprints; and in response to a determination that the generated fingerprint meets the similarity criterion, generating an alert and/or preventing upload of the media content to an upload platform.

As discussed in the background section, existing techniques employed by platforms such as YouTube only compare e.g. actual images or videos with reference images or videos, and as such are generally only able to detect images which are superficially similar or identical. In the context of the present invention, the term "upload platform" is used to describe any platform to which media content can be uploaded, especially those platforms which are publicly accessible to users other than the uploader. Important examples of upload platforms include file sharing platforms or websites, social media platforms (e.g. Instagram, Snapchat, TikTok, Facebook, and Pinterest), and streaming services (including video streaming services such as YouTube, and music streaming services such as Spotify). It will be acknowledged that other upload platforms exist.

In contrast, according to the present invention, by extracting fingerprints using a neural network, it is possible to detect similarities between higher-level, conceptual features. This is particularly advantageous given the ubiquity of images generated using generative artificial intelligence, which may not identically reproduce original images, but may generate images which are conceptually similar to original images. For example, a user may use generative artificial intelligence to generate an image of a well-known character such as Mickey Mouse or Spiderman. Those images may not be identical to images of Mickey Mouse or Spiderman which were used to train the generative artificial intelligence model, but may still resemble the well-known characters. By extracting fingerprints from one or more layers of a neural network, as provided by the present invention, the likelihood of detecting these conceptual similarities increases. The present invention thus provides a technical implementation of a scheme for ensuring that users are only able to upload media content to an upload platform if that media content does not correspond too closely to existing media content which they are not authorized to access or otherwise use in the generation of their own media content.

Thus, one application of the present invention is to execute a check on content being uploaded to e.g. a social media or other accessible platform, to ensure that it is not generated using or otherwise based on media content which the user is not permitted to use (e.g. because it is subject to copyright protection, or because a user does not have permission to access that media content). The present invention thus provides improved data security.

Although the majority of the description set out in this application relates to upload of images, the media content may take any suitable form. In other words, the media content may comprise data representing an image file, sound file, text file, or sound file. This list of examples is by no means exhaustive.

We now discuss in more detail the way in which the fingerprint is generated. As discussed, the fingerprint is generated by applying a neural network to the media content.

The neural network comprises an encoder comprising a plurality of encoder layers (e.g. between 16 and 512 layers), each encoder layer comprising a respective plurality of notes taking respective values. The plurality of encoder layers may comprise an input encoder layer, which is configured to receive an input comprising the media content. From the input encoder layer to the embedding, the number of nodes in each successive encoder layer may be less than the number in the preceding layer (and indeed, in all preceding layers). The neural network may be based on OpenAI's DALL-E or DALL-E 2 neural network'.

[1] https://openai.com/index/dall-e/

The input may comprise or be in the form of a feature vector representative of the media content. For example, when the media content is an image, the feature vector may comprise pixel information. More specifically, the feature vector may comprise a plurality of values, each value indicative of a property of a respective pixel of the image. In some cases, the feature vector may comprise values representing the RGB values of a plurality of the pixels in the image, for example the RGB values of each pixel in the image. Specifically, the feature vector may comprise three values for each pixel to be represented in the image (which may or may not be all of the pixels in the image), each of the three values specifying a respective one of the red level, green level, and blue level. It will be appreciated that other ways of encoding pixel data are also possible, and should be understood to be covered by this invention.

The encoder is configured to generate an embedding of the media content. In the context of the present application, the term "embedding" is used to refer to a representation of the input image in terms of a plurality of variables, the plurality of variables generally comprising significantly fewer variables than in the feature vector. For example, the feature vector may include no fewer than 1,000,000 values, no fewer than 5,000,000 values, no fewer than 10,000,000 values, no fewer than 15,000,000 values, no fewer than 20,000,000 values, or no fewer than 25,000,000 values. The embedding may comprise no fewer than 10 values, no fewer than 50 values, no fewer than 100 values, no fewer than 250 values, no fewer than 500 values, or no fewer than 1,000, values. The embedding may comprise no more than 500 values, no more than 1,000 values, no more than 2,500 values, no more than 5,000 values, or no more than 10,000 values.

The embedding comprises the plurality of values of nodes in an embedding layer which is one of the one or more additional layers.

In other words, the embedding may be thought of as a layer of the one or more additional layers which comprises a plurality of nodes, each node of the plurality of nodes taking a respective value, where each value represents the value of a respective one of the plurality of variables. The plurality of variables generally does not correspond to features of the image which are understood by a human, and as such they may be referred to as latent variables, and the embedding may be referred to as a latent representation, which is effectively a parameterization of the media content in terms of the latent variables.

Depending on the specific neural network used, the encoder layers may comprise different types of encoder layer. For example, the encoder layers may comprise fully connected layers. If the neural network is a convolutional neural network, the encoder layers may comprise one or more convolutional layers[2]. Alternatively, the fingerprint generation neural network or more specifically the encoder layers of the fingerprint generation neural network may be implemented using a transformer architecture including one or more transformer layers[3].

[2] Balle, J; Laparra, V; Simoncelli, EP (April 2017). "End-to-end optimized image compression". International Conference on Learning Representations. arXiv:1611.01704

[3] Masked Autoencoders Are Scalable Vision Learners; Kaiming He, Xinlei Chen, Saining Xie, Yanghao Li, Piotr Dollár, Ross Girshick; Proceedings of the IEEE/CVF Conference on Computer Vision and Pattern Recognition (CVPR), 2022, pp. 16000-16009

In some cases, the fingerprint generation neural network may further comprise a decoder portion comprising a plurality of decoder layers, each comprising a respective plurality of nodes taking respective values. More specifically, the one or more additional layers may comprise or even consist of the embedding and the decoder portion comprising the plurality of decoder layers. Then, the fingerprint may comprise a plurality of values of the nodes of the embedding and/or one or more of the decoder layers. In some cases, the fingerprint may comprise a plurality of the nodes of a plurality of layers selected from the embedding and the plurality of decoder layers. Preferably, the fingerprint comprises a plurality of values of nodes from one or more decoder layers which are close to or adjacent to the embedding.

Herein, when we refer to a plurality of values from nodes "from" one or more layers (e.g. the embedding or decoder layers), this could be the values of all of the nodes of the layers in question, or a subset of the nodes of the layers in question, or a suitable combination of the two. In some cases, in order to reduce the dimensionality of the fingerprint, the computer-implemented method may comprise applying a dimensionality reduction algorithm to the plurality of values of nodes from the one or more layers in question. The dimensionality reduction algorithm may be configured to reduce the number of dimensions of the fingerprint while minimizing the amount of useful information present in the fingerprint. The dimensionality reduction algorithm may be based on principal component analysis. The dimensionality reduction algorithm may be a dimensionality reduction machine-learning model such as a dimensionality reduction neural network. Such a machine-learning model may be trained to map the plurality of values to a fingerprint vector having a reduced dimensionality, such that the retrieval performance from the reference fingerprints is maximized.

The decoder portion may be applied after the embedding is generated by the encoder. Before discussing the decoder portion in more detail, it is worthwhile describing the construction or generation of the neural network. This will also explain why we refer to a decoder "portion", rather than just a decoder.

The fingerprint generation neural network may be described as a truncated autoencoder. Generally, an autoencoder comprises an encoder which is configured to generate an embedding of an input, and a decoder which is configured to recreate the original input based on the embedding (or at least attempting to). The autoencoder may be a variational autoencoder or VAE, which is a variation of an autoencoder in which the encoder is configured to generate an embedding which is a continuous, probabilistic latent representation, rather than encoding a fixed, discrete representation of the latent variables. Standard extensions of the basic autoencoder model, such as residual connections, and skip connections, may also be employed.

Depending on the additional layer at which the truncated autoencoder is truncated, the determination of similarity may correspond to the equivalent of an extrinsic analysis or an intrinsic analysis.

For example, if the fingerprint generation neural network is truncated at an early processing layer, e.g. close to the embedding, the similarity determination is equivalent to an intrinsic analysis, which is a higher-level, more conceptual analysis. For example, in the case of image content, an intrinsic analysis would capture the overall impression of the images, and thus would determine whether an average observer might consider whether the images are substantially similar in terms of their expression, rather than in terms of specific details. Conversely, if the fingerprint generation neural network is truncated at a later processing layer, e.g. close to a layer where a final recreation of the media content might be generated, the similarity determination is equivalent to an extrinsic analysis, which is more detail-oriented, and based on specific elements of the media content. For example, again in the case of image content, extrinsic analysis would be based on specific elements such as composition, colour, shapes, angles, and/or objects. The similarity determination may comprise two separate analyses, one intrinsic and one extrinsic. Different respective reference fingerprints and/or codebooks may be used for extrinsic analysis and intrinsic analysis.

The fingerprint generation neural network may have been trained in the usual manner, by applying an untrained or default version of the fingerprint generation neural network to a plurality of inputs, thereby generating a respective plurality of outputs. Rather than applying an untrained version of the fingerprint generation neural network, a partially-trained or pre-trained version of the fingerprint generation neural network could also be applied. The value of a loss function is then calculated based on a difference between expected or target outputs (which are essentially identical to the inputs in this context, because the aim of the neural network would be to recreate the image as closely as possible) and the generated outputs, and the values of the weights and/or biases of the nodes of the encoder layers and decoder layers are then adjusted in order to reduce the value of the loss function, using gradient descent. This process may then be iterated until a termination condition is met (e.g. a predetermined number of training epochs or a threshold value of the loss function). At this point, the fingerprint generation neural network may be referred to as the trained fingerprint generation neural network. The training inputs may comprise the media content from which the reference fingerprints are derived, in order to ensure that the fingerprint generation neural network "learns" how to parameterize hidden features associated with that media content.

The training inputs may be augmented to improve the quality of the training. For example, the training inputs may further comprise media content which corresponds to the initial media content having undergone a transformation to which it is desirable for the machine-learning model to be invariant. In the case of image content and video content, this may comprise scaling, rotation, mirroring or colour changes, and in the case of audio content, this may comprise changes in tempo or speed, and changes in volume, or changes in frequency or pitch. Neural radiance fields may also be used in the case of image content and video content.

In the present invention, it is not necessary to recreate the media content. Rather, the aim is to generate a fingerprint representing a relatively high-level parameterization of the media content in terms of hidden variables. For this reason, it is not necessary for the fingerprint generation neural network to include the whole decoder of the autoencoder, instead including only a decoder portion. As discussed previously, in some cases, the fingerprint may comprise a vector comprising the values of a plurality of the nodes from the embedding layer. In such cases, the fingerprint generation neural network may not include a decoder portion at all.

The reference fingerprints stored in the database may have been generated using the same trained fingerprint generation neural network. Herein, by the "same" trained fingerprint generation neural network, we do not necessarily mean the same instantiation of the fingerprint generation neural network, e.g. trained on the same physical machine. Rather, the "same" trained fingerprint generation neural network refers to a fingerprint generation neural network which has the same architecture, the same sets of weights and biases, and any other governing parameters. By generating the reference fingerprints using the same trained fingerprint generation neural network, it is possible to ensure that the various values in the generated fingerprints and reference fingerprints parameterize or otherwise define the same latent variables. This means that a comparison between the generated fingerprint and the reference fingerprints is meaningful.

Each reference fingerprint may have been created from respective media content, e.g. an image, a song, or a video clip, optionally in the same manner as the fingerprint is generated from the received media content. The database may comprise a plurality of packages of reference fingerprints, wherein the term "package" is used to refer to a set or subset of the reference fingerprints. Each package may correspond to a respective source of media content. Returning to an example used earlier, one package may include media content owned by Disney, and another package may include media content owned by Marvel. Each package may comprise one or more sub-packages, each sub-package comprising reference fingerprints derived from media content sharing a common attribute, e.g. media content pertaining to a particular character, film, or the like. Different users or client may be permitted to use different media content. For example, some users may be permitted to use media content owned by Disney to train generative AI models, e.g. due to the presence of a licensing agreement or the like, but they may not be permitted to use media content owned by Marvel for the same purpose. Access rights data may exist which defines which entities are permitted to use which packages or sub-packages of media content. In order to reduce the number of comparisons with reference fingerprints, it would be beneficial only to determine whether the generated fingerprint is similar to reference fingerprints derived from media content to which a user does not have access, rather than e.g. all of the reference fingerprints, of which there may be many hundreds, thousands, millions, tens of millions, or hundreds of millions. Accordingly, the computer-implemented method may further comprise identifying or selecting a subset of reference fingerprints in the database, wherein meeting the similarity criterion is indicative of the generated fingerprint being similar to one or more of the identified or selected fingerprints. Identifying or selecting the reference fingerprints may be based on access rights data defining one or more packages and/or sub-packages of reference fingerprints which each of a plurality of users is permitted to access. The computer-implemented method may comprise identifying or selecting, from the database, reference fingerprints which the user is not permitted to access. The identification or selection may be based on e.g. an identifier of the user or user device from whom/which the request is received, or a token or data which forms part of the request, and defines e.g. an access level or access rights to a particular subset of the packages or sub-packages.

Up to now, we have described the generation of the fingerprint from the incoming media content. We now discuss in more detail the comparison of the fingerprint with the reference fingerprints and the similarity criterion.

The determination as to whether the similarity criterion is met may be executed in a variety of ways. Generally, determining whether the generated fingerprint meets the similarity criterion may comprise determining the value of a distance metric or a similarity metric, and subsequently determining whether the value of the distance metric falls below a predetermined threshold, or whether the value of the similarly metric exceeds a predetermined threshold. The value of the predetermined thresholds may be adjustable, e.g. in response to an input from a user, or in response to an input from parties controlling authorization to access or otherwise use the media content.

Determining a value of a distance metric may comprise determining a distance between the generated fingerprint and each of the reference fingerprints. Because the fingerprints and reference fingerprints comprise vectors (i.e. arrays of values, each corresponding to a respective latent variable), determining the distance between the generated fingerprint and each of the reference fingerprints may comprise determining a Euclidean distance, determining a cosine distance, determining a Manhattan distance, determining a Minkowski distance or determining a Hamming distance between the generated fingerprint and each of the reference fingerprints. This list is not exhaustive, and suitable combinations of the proposed distance metrics may also be used.

Determining whether the similarity criterion is met may then comprise determining whether the value of the distance metric calculated between the generated fingerprint and each of the reference fingerprints falls below a predetermined minimum distance threshold. If it is determined that the value of the distance metric between the generated fingerprint and one or more of the reference fingerprints falls below the predetermined minimum distance threshold, then it may be determined that the similarity criterion is met. Alternatively, in order for the similarity criterion to be met, it may be required that the value of the distance metric falls below the predetermined minimum distance threshold for a predetermined number of reference fingerprints. This may ensure that the similarity between the generated fingerprint and e.g. a single reference fingerprint does not give rise to an alert because the fingerprints are coincidentally similar, rather than any meaningful conceptual similarity between the media content and the meaning content from which the reference fingerprint was generated.

In some cases, determining whether the similarity criterion is met may comprise applying a k-nearest neighbours (k-NN) algorithm. A k-NN algorithm takes as its input a vector (in this case, the generated fingerprint), and outputs k nearest neighbours to that input vector, in this case from the reference fingerprints (all of which are also expressed as vectors having the same dimension as the generated fingerprint). Only those nearest neighbours which are within a threshold distance from the input vector may be identified, in order to ensure that reference fingerprints which are genuinely completely different from the input vector are not arbitrarily selected. The k nearest neighbours may be those reference fingerprints having the smallest value of a distance metric, e.g. a Euclidean distance, a cosine distance, a Manhattan distance, a Minkowski distance, or a Hamming distance. In implementations of the present invention, $k$ may take any values suitable for the application. For example, k may be in the range from 2 to 100. For the identified k nearest neighbour reference fingerprints, determining whether the similarity criterion is met may further comprise determining to which package or sub-package each k nearest neighbour reference fingerprint belongs. For each package, determining whether the similarity criterion is met may further comprise calculating, computing, or otherwise determining a probability that the media content is similar to media content in that package or sub-package based on the proportion of the k nearest neighbour reference fingerprints determined to belong to that package or sub-package. For example, the probability may be calculated by dividing the number of the k-nearest neighbour reference fingerprints which belong to the given package or sub-package by k. Alternatively put, where $n_i$ is the number of the k nearest neighbour reference fingerprints in package i:

$$P(\text{fingerprint belongs to package } i) = \frac{n_i}{k}$$

An analogous equation applies to sub-packages.

Then, determining whether the similarity criterion is met may comprise determining whether the proportion of the k nearest neighbour reference fingerprints, or the probability, exceeds a predetermined probability threshold. The predetermined probability threshold may be no less than 30%, no less than 40%, no less than 50%, no less than 60%, no less than 70%, no less than 80%, no less than 90%. The predetermined probability threshold may be no more than 50%, no more than 60%, no more than 70%, no more than 80%, no more than 90%, or no more than 100%. For example, the predetermined probability threshold may be in the range of 40% to 100%.

Rather than using a "traditional" similarity metric or distance metric, as outlined above, machine-learning methods may be used to determine whether the similarity criterion is met. Broadly, a machine-learning model may be trained to determine whether the generated fingerprint meets the similarity criterion. Accordingly, determining whether the generated fingerprint meets the similarity criterion may comprise applying a trained machine-learning model to the generated fingerprint, trained-machine learning model configured to generate an output indicative of whether the similarly criterion is met. The output may be a binary output, e.g. specifying that the generated fingerprint meets the similarly criterion, or specifying that the generated fingerprint does not meet the similarity criterion. Alternatively, the output may comprise a likelihood or a probability that the generated fingerprint is similar to one or more of the reference fingerprints. It may then be determined that the similarity criterion is met when the output likelihood or probability exceeds a predetermined threshold value. The binary output and the output likelihood or probability may be regarded as similarity or distance metrics in the context of the present invention.

The machine-learning model may be a classifier trained using training data comprising pairs of data, each pair of data comprising a training fingerprint, and a label indicative of whether the media content from which that training fingerprint was derived is similar to any of the media content from which the reference fingerprints were derived. Having been trained, the classifier may be configured either to output a binary classification (i.e. similar or not similar), or a probability that the media content on which a fingerprint is based is similar to media content from which one or more of the reference fingerprints is based. The machine-learning model, e.g. the classifier, may be in the form of a neural network such as a convolutional neural network or a support vector machine. Such a neural network may comprise, for example, 3 to 10 fully connected layers and/or 3 to 10 convolution layers.

There may be a separate machine-learning model associated with each package or sub-package, in those implementations in which the reference fingerprints are divided into packages and, optionally, sub-packages. Each package-specific machine-learning model may accordingly be configured to generate an output indicative of whether the generated fingerprint is similar to any of the reference fingerprints within the package to which the machine-learning model is package specific. The package-specific machine-learning model may be trained as outlined above. Analogous features apply to e.g. sub-package-specific machine-leaning models. The existence of a set of package-specific machine-learning models (or sub-package-specific machine-learning models) can reduce the amount of computation required in order to determine whether a similarity criterion is met. For example, determining whether the similarity criterion is met may comprise selecting or identifying one or more package-specific machine learning models and separately applying each selected or identified package-specific machine-learning model to the generated fingerprint to generate a respective output indicative of the similarity between the generated fingerprint and the reference fingerprints in the packages corresponding to the package-specific machine-learning models. This is effectively an indication of the similarity between the media content from which the generated fingerprint was derived and the media content from each of the packages. In this way, it is not necessary to apply all package-specific machine-learning models to the generated fingerprint, reducing computational demand.

The present invention may effectively provide a filter which ensures that users are prevented from uploading or otherwise publishing media content which was (or is likely to have been) generated based on existing media content which they are not permitted to access or use to generate new media content. Accordingly, the computer-implemented method may further comprise the step of receiving the media content. The media content may be received at a platform which is configured to execute the remaining steps of the computer-implemented method. The request may comprise a request to upload the media content to an upload platform, which may be any of the upload platforms mentioned earlier in this application.

When it is determined that the similarity criterion is met, i.e. that the media content which the user is attempting to upload is too similar to (i.e. exceeds some threshold similarity) media content from which one or more of the reference fingerprints is derived, and the user receives an alert or the media content is prevented from being uploaded, it may be useful for the user to understand why this is the case, in order to provide a more ergonomic upload experience. Accordingly, in response to a determination that the similarity criterion is met, the computer-implemented method may further comprise retrieving one or more items of media content having respective fingerprints which are most similar to the generated fingerprints, and providing the retrieved media content to the user. For example, when a user is trying to upload an image file, if it is determined that the image file is too similar to references images in one of the packages, then those reference images may be retrieved and displayed to the user, to enable them better to understand why the alert was generated or upload was prevented. The one or more items of media content may be identified using a similarity metric or distance metric, or using machine-learning methods, as explained previously in this application.

A second aspect of the present invention may provide a system or platform for controlling upload of media content to an upload platform, the platform comprising: a fingerprint generation module configured to generate a fingerprint based on received media content by applying a trained fingerprint generation neural network to the media content, the trained fingerprint generation neural network comprising: an encoder configured to generate an embedding of the media content, the encoder comprising a plurality of encoder layers, each comprising a respective plurality of nodes taking respective values; and one or more additional layers, the one or more additional layers comprising the embedding, each additional layer of the one or more additional layers comprising a respective plurality of nodes taking respective values, wherein the fingerprint comprises a vector comprising the values of a plurality of nodes from the one or more additional layers; a similarity determination module configured to access a database of reference fingerprints, each reference fingerprint generated based on a respective item of media content; determining whether the generated fingerprint meets a similarity criterion, wherein meeting the similarity criterion is indicative of the generated fingerprint being similar to one or more of the reference fingerprints; and an output module configured, in response to a determination that the generated fingerprint meets the similarity criterion, generate an alert and/or prevent upload of the media content to the upload platform. The modules referred to may be regarded as functional modules which may be implemented either in hardware (i.e. dedicated physical modules adapted to execute each function), or software (i.e. in the form of portions of code which, when executed, cause the module in question to execute the specified function). Herein, the term "platform" may be used to refer to specific computer hardware which is configured to execute a specific function. It may also refer to a specific combination of hardware and an operating system and/or compiler. The system or platform may be implemented in the form of a server. It will be appreciated that they system or platform of the second aspect of the present invention (or more specifically, the modules thereof) executes the computer-implemented method of the first aspect of the invention. Accordingly, the optional features set out above in respect of the first aspect of the invention also apply equally well to the platform or system of the second aspect of the invention. Additional functional modules may be defined and labelled, which are responsible for executing various optional method steps. Any names given to such functional modules may be considered as labels only.

A third aspect of the present invention provides a computer program or computer program product comprising instructions which, when the program is executed by a computer, cause the computer to execute a computer-implemented method of controlling the upload of media content, the computer-implemented method comprising: generating a fingerprint, based on received media content, by applying a trained fingerprint generation neural network to the media content, the trained fingerprint generation neural network comprising: an encoder configured to generate an embedding of the media content, the encoder comprising a plurality of encoder layers, each comprising a respective plurality of nodes taking respective values; and one or more additional layers, the one or more additional layers comprising the embedding, each additional layer of the one or more additional layers comprising a respective plurality of nodes taking respective values, wherein the fingerprint comprises a vector comprising the values of a plurality of nodes from the one or more additional layers; accessing a database of reference fingerprints, each reference fingerprint generated based on a respective item of media content; determining whether the generated fingerprint meets a similarity criterion, wherein meeting the similarity criterion

ion is indicative of the generated fingerprint being similar to one or more of the reference fingerprints; and in response to a determination that the generated fingerprint meets the similarity criterion, generating an alert and/or preventing upload of the media content to an upload platform. The computer program or computer program product of the third aspect of the invention may be embodied in a downloadable executable file. Optional features set out above in respect of the computer-implemented method of the first aspect of the first aspect of the invention also apply equally well to the computer program or computer program product of the third aspect of the invention.

The invention includes the combination of the aspects and preferred features described except where such a combination is clearly impermissible or expressly avoided.

## BRIEF DESCRIPTION OF THE DRAWINGS

Embodiments of the present invention will now be described with reference to the accompanying drawings, in which:

- Fig. 1 depicts a system which may be used to execute a computer-implemented method according to an aspect of the present invention.

- Fig. 2 is a flowchart illustrating a high-level computer-implemented method according to an aspect of the present invention.

- Fig. 3 is a schematic illustration of a fingerprint generation neural network which may be employed in implementations of a computer-implemented method according to the present invention.

- Fig. 4 is a flowchart illustrating a computer-implemented method by which it may be determined whether a similarity criterion is met.

- Fig. 5 is a flowchart illustrating an alternative computer-implemented method by which it may be determined whether a similarity criterion is met.

## DETAILED DESCRIPTION OF THE DRAWINGS

Aspects and embodiments of the present invention will now be discussed with reference to the accompanying figures. Further aspects and embodiments will be apparent to those skilled in the art. All documents mentioned in this text are incorporated herein by reference.

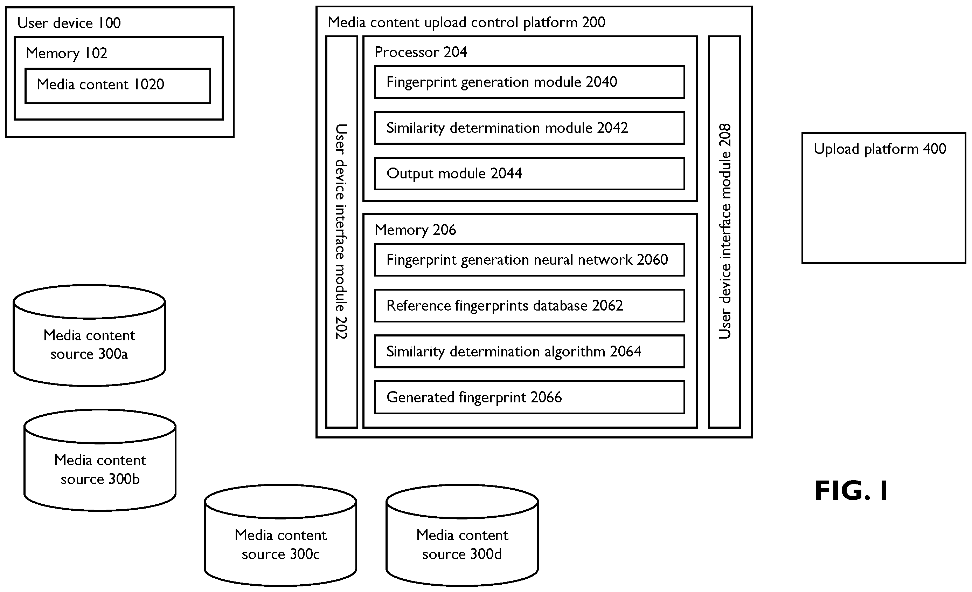

Fig. 1 shows a system which may be used execute a computer-implemented method according to the present invention, for illustrative purposes. It should be noted that the system shown in Fig. 1 is an example system only, and computer-implemented methods according to e.g. the first aspect of the present invention could be executed using other specific arrangements of hardware (or software).

The system includes a user device 100, a media content upload control platform 200, several media content sources 300a, 300b, 300c, 300d, and an upload platform 400. The media content upload control platform 400 is a system or platform which is configured to determine if received media contains access restricted or copyrighted. These components may interact via a network (not shown), which may be a wired network, or a wireless network (such as a WiFi network, or a cellular network). The components may interact via the internet. It will be appreciated that in some cases, the components shown may interact via combination of wired networks and wireless networks: all such combinations of wired networks and wireless networks are envisaged.

The user device 100 may be any personal computing device, such as a laptop computer, a desktop computer, a mobile phone such as a smartphone, or a tablet. Among other components, which are not shown, the user device 100 includes a memory 102 which stores media content 1020. For the purposes of this disclosure, the media content 1020 is media content which the user wishes to, or attempts to upload to upload platform 400. The upload platform 400 is any platform to which a user of the user device 100 may upload (or attempt to upload) media content 1020 so that it is publicly accessible. Examples of such upload platforms 400 include social media platforms, file sharing platforms, and streaming platforms (e.g. video or music streaming platforms).

The media content upload control platform 200 comprises a user device interface module 202, a processor 204, a memory 206, and an upload platform interface module 208.

The media content upload control platform 200 acts as a filter to ensure sure that media content 1020 is permitted to be uploaded by the user of user device 100 to the media content upload control platform 200. The media content upload control platform 200 may be hosted by the upload platform 400, e.g. on a server owned or managed by the upload platform 400. The media content upload control platform 200 may alternatively be hosted on a cloud computing server.

When a user of the user device 100 requests to upload media content 1020 to the upload platform 400, the media content 1020 is transmitted to the upload platform 400, whereupon the media content 1020 may be transmitted to the media content upload control platform 200 for processing, before upload. Alternatively, the media content 1020 may be sent by the user device 100 directly to the media content upload control platform 200. The operation of the media content upload control platform 200 is described in detail later in this disclosure.

The user device interface module 202 is a module via which the media content upload control platform 200 may communicate with the user device 100, and may be in the form of a network connection component, such as a wireless network connection component. The user device 100 may have a corresponding platform interface module, not shown. Similarly, the upload platform interface module 208 is a module via which the media content upload control platform 200 may communicate with the upload platform 400, and may be in the form of a network connection component, such as a wireless network connection component. In some cases, the media content upload control platform 200 may be part of the upload platform 400, in which case, the media content upload control platform 200 may not comprise an upload platform interface module 208.

The processor 204 of the media content upload control platform 200 comprises a fingerprint generation module 2040, a similarity determination module 2042, and an output module 2044. Each of these is a functional module configured to execute (or cause execution of) a respective function, discussed in more detail later. The modules may be implemented in hardware. The hardware may comprise bespoke physical components or sub-components which are adapted or otherwise configured to execute their respective function. Alternatively, the modules may be in the form of software, for example in the form of portions of code which, when executed by the processor 204, cause it to execute the respective function. The modules may, in some cases, be implemented in a combination of hardware and software.

The memory 206 of the media content upload control platform 200 comprises or stores various types of data, examples of which are shown, and include the fingerprint generation neural network 2060, a reference fingerprint database 2062, and a similarity determination algorithm 2064.

Generated fingerprints 2066 may be stored in the memory 206 of the media content upload control platform 200. The generated fingerprints 2066 are generally not stored in the memory 206 from the outset (i.e. from before the upload request is received from the user device 100), because it is generated by virtue of the action of the fingerprint generation module 2040, as explained later. It should be noted that these features may alternatively, rather than being stored on the media content upload control platform 200 itself (or a physical or virtual/logical device on which the media content upload control platform 200 is hosted), be stored on an external database (not shown) from which they can be accessed and/or retrieved by the various functional modules of the processor 204 of the media content upload control platform 200. The content sources 300a, 300b, 300c, and 300d represent the sources of media content from which the reference fingerprints stored in the reference fingerprint database 2062 are derived. Each source of media content 300a, 300b, 300c, 300d may correspond to a different package of reference fingerprints stored in the reference fingerprint database 2062.

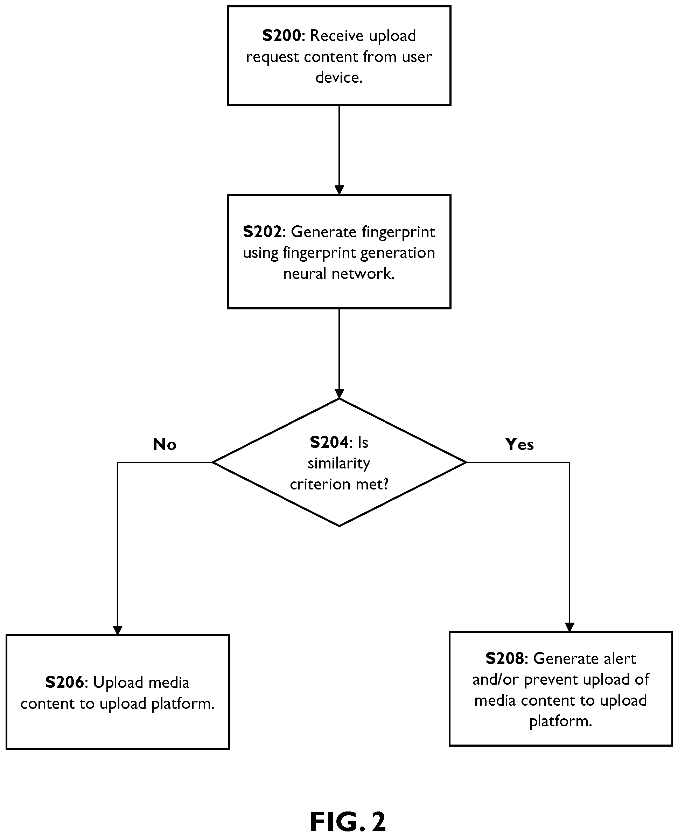

We now discuss the computer-implemented method of the present invention, which is depicted schematically in Fig. 2.

In a first step S200, an upload request is received at the media content upload control platform 200 from the user device 100. The upload request may be received at the media content upload control platform 200 directly from the user device 100, via the user device interface module 202. Alternatively, the upload request may have been transmitted from the user device 100 to the upload platform 400, and the upload request may be received at the media content upload control platform 200 from the upload platform 400 via the upload platform interface module 208. The upload request may contain media content 1020, the upload of which to the upload platform 400 is being requested by the user of the user device 100. The upload request may comprise additional information, such as a user identifier which identifies, preferably uniquely, the user of the user device 100 from which the upload request is received. The upload request may further comprise other metadata, for example a user device identifier which identifies, preferably uniquely, the user device 100 from which the upload request is received. The user device identifier may comprise an electronic address, such as an IP address, of the user device 100.

In the next step S202, a fingerprint of the media content 1020 is generated using the fingerprint generation neural network 2060. More specifically, the fingerprint generation module 2040 of the processor 204 retrieves or accesses the fingerprint generation neural network 2060 from the memory 206 of the media content upload control platform 200. Then, the fingerprint generation module 2040 of the processor 204 applies the fingerprint generation neural network 2060 to the data representing the media content 1020.

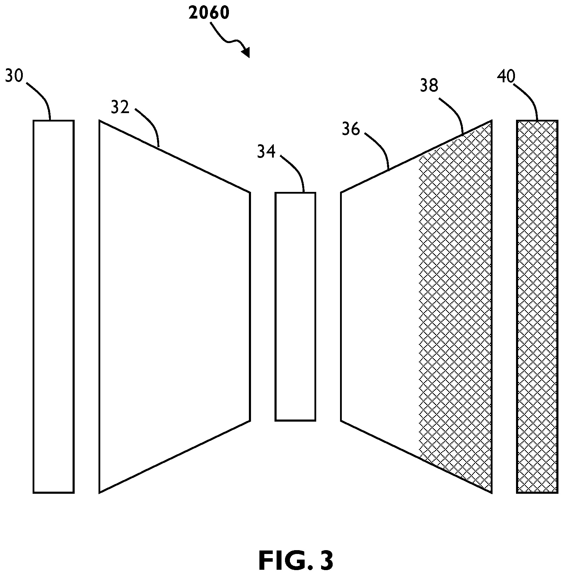

The fingerprint generation neural network 2060 is shown schematically in Fig. 3. More specifically, Fig. 3 shows a complete image generation neural network., of which the fingerprint generation neural network 2060 is a component part. The neural network shown in Fig. 3 comprises an encoder 32 comprising a plurality of encoder layers (not shown). The neural network shown in Fig. 3 has an autoencoder structure, and may be a variational autoencoder. A first layer of the encoder layers of the encoder 32 may be referred to as an input layer 30, into which the data representing the media content 1020 is fed. The input layer 30 may comprise a plurality of nodes which is equal to a number of values of a feature vector which is representative of the media content 1020, so that each value in the feature vector can be input into a respective node of the input layer 30 of the encoder 32 of the fingerprint generation neural network 2060.

The encoder 32 comprises a plurality of encoder layers, each of which may have fewer nodes than the previous encoder layer. The encoder layers may be convolutional layers, or fully connected layers, or a combination of the two. The encoder 32 is configured to generate an embedding 34, which is a representation of the input data, i.e. the feature vector representing the media content 1020 in terms of a plurality of latent or hidden variables. The embedding preferably has a much lower dimensionality than the feature vector representing the original media content 1020. After the embedding or embedding layer 34, the fingerprint generation neural network 2060 comprises a decoder 36 which comprises a plurality of decoder layers (not shown). The function of the decoder layers is to attempt to recreate the original media content 1020 in an output layer 40 of the decoder layers. In Fig. 3 the leftmost subset of decoder layers 38 and the output layer 40 of the decoder 36 are hashed out. This is to represent the fact that these layers 38, 40 do not form part of the fingerprint generation neural network 2060. The fingerprint which is generated in step S202 of Fig. 2 comprises a plurality of values which are selected from the embedding layer 34 and/or a subset of the decoder layers of the decoder 36.

The plurality of values may be selected from a single layer of the fingerprint generation neural network 2060, or from a plurality of layers. It is preferable that the plurality of values is selected from a decoder layer which is close to the embedding layer 34 to ensure that the values are representative of relatively high level or gross features of the media content 1020, rather than very fine or specific details. This ensures that the generated fingerprint is able to be better representative of the conceptual content of the media content 1020. The generated fingerprint is preferably in the form of a vector comprising a plurality of values. Step 202 may comprise extracting the values from the plurality of layers of the fingerprint generation neural network 2060 to form the generated fingerprint 2066 which may then be stored in the memory 206 of the media content upload control platform 200.

Optionally, before applying the fingerprint generation neural network 2060, the similarity determination module 2042 of the processor 204 may be configured to determine, using existing methods, whether the media content 1020 is identical (or above a tolerance threshold for similarity) to restricted content, which may be stored in a restricted content database. For example, the similarity determination module may be configured to determine whether the feature vector representing the media content is identical to a feature vector of reference media content. This determination may take place using known methods. Alternatively, rather than taking place using known methods, it can optionally be determined whether the generated fingerprint 2066 is identical (or above a tolerance threshold for similarity) to a fingerprint for a reference image, and if so, generate an output to display a warning. If it is determined that the generated fingerprint 2066 is not identical to a fingerprint of a reference image, then the process may proceed to determine whether a similarity criterion is met, explained below.

In step S204, a similarity criterion of the fingerprint 2066 generated by the fingerprint generation neural network 2060 is determined. This determination is executed by the similarity determination module 2042 of the processor 204 of the media content upload control platform 200, by retrieving similarity determination algorithm 2064 from the memory 206. Herein, "similarity determination algorithm" 2064 is used broadly to refer to any series of steps which are used to determine whether the generated fingerprint 2066 meets the similarity criterion. In order to determine whether the similarity criterion is met, the similarity determination module 2042 may retrieve the reference fingerprints from the reference fingerprint database 2062, or otherwise access them.

The reference fingerprint database 2062 may comprise a plurality of packages of reference fingerprints (not shown), each package comprising reference fingerprints derived from media content originating from a respective media content source of the media content sources 300a, 300b, 300c, 300d. These media content sources 300a, 300b, 300c, 300d may be entities who control access to the media content, and each of the media content sources 300a, 300b, 300c, 300d, may be associated with different types of content. In some embodiments, the user of the user device 100 (who may be identified by information in the upload request) may be permitted access or permitted to use media content in a subset of the packages. In that case, the similarity determination module 2042 may only determine, e.g. based on access rights data or access control data stored either in memory 206, or externally, whether the similarity criterion is met in respect of a subset of the reference fingerprints in the reference fingerprints database 2062. In that case, the computer-implemented method may comprise retrieving, from the reference fingerprints database 2062, reference fingerprints from a subset of the plurality of packages of reference fingerprints stored therein. The similarity determination algorithm 2064, i.e. the steps performed to determine whether the generated fingerprint 2066 meets the similarity criterion, is the same regardless of whether all of the reference fingerprints from the reference fingerprints database 2062 or just a subset of the packages of the reference fingerprints from the reference fingerprints database 2062 are retrieved and used.

We now describe three variants of how the similarity determination module 2042 may determine, using the similarity determination algorithm 2064, whether the generated fingerprint 2066 meets the similarity criterion in respect of the reference fingerprints which are retrieved from the reference fingerprints database 2062.

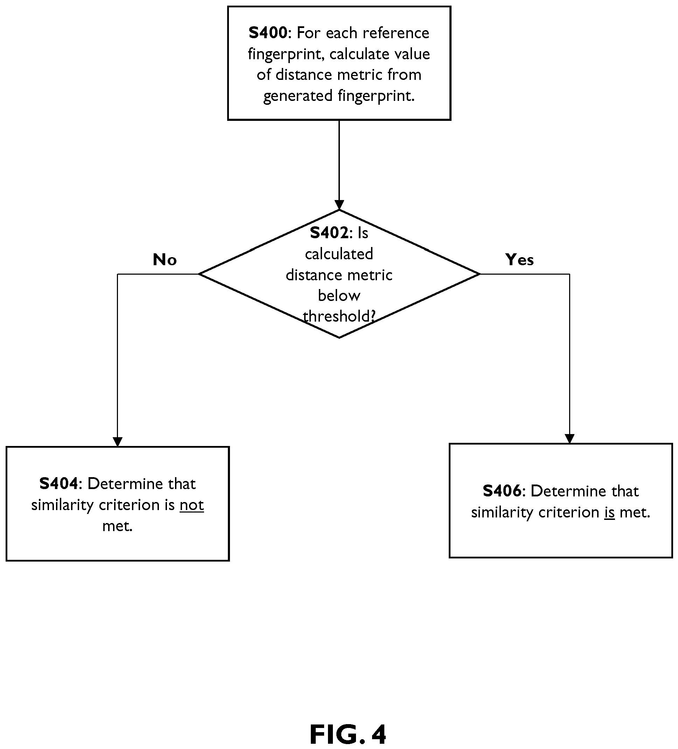

- A **first** process, which may be considered to correspond to a first example of the similarity determination algorithm 2064, is illustrated schematically in Fig. 4. In step S400, for each reference fingerprint, the value of a distance metric parameterizing or otherwise defining or describing a difference between the reference fingerprint and the generated fingerprint 2066 is calculated. Given that both the generated fingerprint 2066 and all of the reference fingerprints are vectors having the same dimensionality (i.e. numbers of constituent scalar values), the distance metric may be, for example, a Euclidean distance. Other distance metrics may also be used, and have been specified elsewhere in this disclosure. In step S402, the similarity determination module 2042 determines whether the value of the distance metric calculated in respect of the generated fingerprint 2066 and any of the reference fingerprints is below a predetermined distance threshold. This effectively enables the similarity determination module 2042 to determine whether the generated fingerprint 2066 is "too similar" to the media content from which the reference fingerprints are generated. The predetermined distance threshold may vary between different packages of reference fingerprints (e.g. because some media content sources 300a, 300b, 300c, 300d have different standards as to whether media content is "too similar" to their own), and the predetermined distance threshold(s) may be adjustable. If it is determined in step S402 that a value of a distance metric calculated in respect of the generated fingerprint 2066 and the reference fingerprints does not fall below the threshold (i.e. the two are not "too similar"), the process proceeds to step S404, and it is determined that the similarity criterion is not met. On the other hand, if it is determined in step S402 that a value of the distance metric calculated in respect of the generated fingerprint 2066 and one or more of the reference fingerprints (i.e. the two are "too similar"), the process proceeds to step S406 and it is determined that the similarity criterion is met. In a modified version of the first process depicted in Fig. 4, it may be determined that the similarity criterion is met only in the event that the value of the distance metric falls below the predetermined threshold for a threshold number of reference fingerprints.

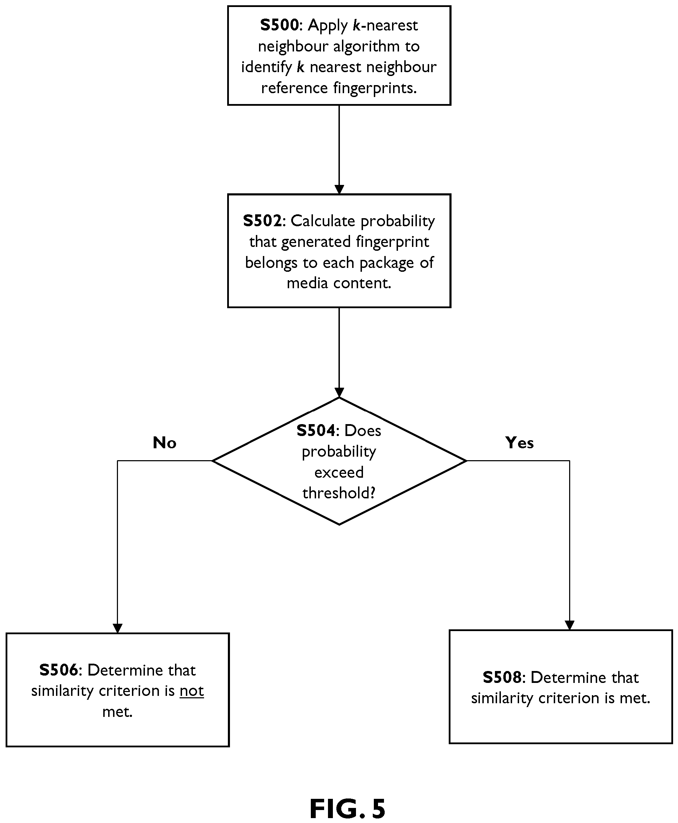

- A **second** process, which may be considered to correspond to a second example of the similarity determination algorithm 2064, is illustrated schematically in Fig. 5. This process may be used where a plurality of packages of reference fingerprints is being considered. In step S500, a k-nearest neighbours algorithm is applied to the generated fingerprint 2066 to identify the k nearest neighbour reference fingerprints. In step S502, the similarity determination module 2042 then calculates a probability that the generated fingerprint 2066 is generated based on (or is otherwise "too similar" to) media content from each of the packages of media content from which the respective packages of reference fingerprints were derived. In one implementation, this may be achieved by determining the proportion of the identified k nearest neighbour reference fingerprints which belong to each package of reference fingerprints. Having calculated a probability for each package in step S502, in step S504, it is determined whether any of the probabilities exceeds a predetermined threshold. As before, the predetermined threshold may vary between different packages of reference fingerprints (e.g. because some media content sources 300a, 300b, 300c, 300d have different standards as to whether media content is "too similar" to their own), and the threshold(s) may be adjustable. If it is determined in step S504 that none of the calculated probabilities exceeds the threshold, the process proceeds to step S506, and it is determined that the similarity criterion is not met. On the other hand, if it is determined in step S504 that one or more of the probabilities exceeds the threshold, the process proceeds to step S508, and it is determined that the similarity criterion is met.

■ Rather than using more traditional distance metrics, as is the case in the first and second processes described above, a **third** process relies on machine-learning methods to determine whether the similarity criterion is met. In this case, the similarity determination algorithm 2064 may be or comprise a trained machine-learning model. The machine-learning model may take as its input the reference fingerprint 2066, and be configured to generate an output indicative of whether the similarity criterion is met. For example, the trained-machine learning model may be configured to output a vector comprising a plurality of values, each value indicative of a probability or likelihood that the media content 1020 was generated based on, or otherwise using, media content from which the reference fingerprints in a respective package was derived. Then, if any of those values exceeds a predetermined threshold, it may be determined that the similarity criterion is met, and *vice versa.* In some cases, the similarity determination algorithm 2064 may comprise a plurality of trained machine-learning models, each trained machine-learning model configured to generate an output indicative of whether the reference fingerprint 2066 is similar to media content from which the reference fingerprints in a respective package were derived. More briefly, there may be a respective machine-learning algorithm associated with each package of reference fingerprints. The output of each of the trained-machine learning models may be or comprise a value indicative of a likelihood or probability that the reference fingerprint 2066 was generated based on, or otherwise using, media content from which the reference fingerprints in the respective package corresponding to that trained machine-learning model was derived. Then, if any of those values exceeds a predetermined threshold, it may be determined that the similarity criterion is met, and *vice versa.* The trained machine-learning models referred to above may comprise neural networks, or a support vector machine. It will be appreciated that other machine-learning models could be used.

It will be appreciated that the three processes outlined above represent a non-exhaustive list of example techniques, and that other methods of determining whether a similarity criterion is met in step S204 could also be employed, without falling outside the scope of the invention.

Returning now to the process illustrated in Fig. 2, if it is determined in step S204 that the similarity criterion is not met, i.e. that the reference fingerprint 2066 representing the received media content 1020 is not determined to be too similar to any of the reference fingerprints in the reference fingerprints database 2062, the process proceeds to step S206, whereupon the media content 1020 may be uploaded to the upload platform 400.

Alternatively, the upload may not take place immediately, and the media content 1020 may be stored in e.g. a buffer or a queue on the upload platform 400 for later upload. Conversely, if it is determined in step S204 that the similarity criterion is met, i.e. that the reference fingerprint 2066 representing the received media content 1020 is determined to be too similar to one or more of the reference fingerprints in the reference fingerprints database 2062, the process proceeds to step S208.

Here, the output module 2044 of the processor 204 may generate an alert to be displayed to a user of the user device 100, which indicates that the media content 1020 has been determined to be similar to existing media content from one or more of the media content sources 300a, 300b, 300c, 300d. More specifically, the output module 2044 may be configured to generate and transmit to the user device 100 via the user device interface module 202 instructions which, when executed by the a process of the user device 100 (not shown), cause a display component (not shown) of the user device 100 to display an alert that indicates that the media content 1020 has been determined to be similar to existing media content from one or more of the media content sources 300a, 300b, 300c, 300d. At this point, the computer-implemented method may further comprise identifying and retrieving the media content to which the media content 1020 was determined to be too similar, wherein the instructions further cause the display component of the user device 100 to display information about the identified media content, e.g. identifying the media content, or displaying the media content itself. Rather than, or in addition to generating an alert, in step S208, the output module may generate and transmit to the upload platform 400, via the upload platform interface module 208, instructions which, when executed by a processor of the upload platform (not shown), prevent the media content 1020 from being uploaded to the upload platform 400. The user of the user device 100 may be alerted to this as explained above, and the similar media content may also be identified and displayed to the user of the user device 100, again as explained above.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A computer-implemented method of controlling the upload of media content, the computer-implemented method comprising:

  generating a fingerprint, based on received media content, by applying a trained fingerprint generation neural network to the media content, the trained fingerprint generation neural network comprising:

  an encoder configured to generate an embedding of the media content, the encoder comprising a plurality of encoder layers, each comprising a respective plurality of nodes taking respective values; and one or more additional layers, the one or more additional layers comprising the embedding, each additional layer of the one or more additional layers comprising a respective plurality of nodes taking respective values, wherein the fingerprint comprises a vector comprising the values of a plurality of nodes from the one or more additional layers;

  accessing a database of reference fingerprints, each reference fingerprint generated based on a respective item of media content; determining whether the generated fingerprint meets a similarity criterion, wherein meeting the similarity criterion is indicative of the generated fingerprint being similar to one or more of the reference fingerprints; and in response to a determination that the generated fingerprint meets the similarity criterion:

  generating an alert; and/or preventing upload of the media content to an upload platform.

2. The computer-implemented method of claim 1, wherein:

  the fingerprint generation neural network is an autoencoder; the fingerprint generation neural network further comprises: a plurality of decoder layers, each comprising a respective plurality of nodes taking respective values; the one or more additional layers comprise the embedding in an embedding layer and the decoder portion; and the generated fingerprint comprises a plurality of values of the nodes of the embedding and/or one or more of the decoder layers.

3. The computer-implemented method of claim 1 or claim 2, wherein the trained fingerprint generation neural network has been trained by:

  applying an untrained version or partially-trained of the fingerprint generation neural network to a plurality of training inputs, thereby generating a respective plurality of outputs; calculating a value of a loss function based on a difference between the generated outputs and respective expected outputs;

adjusting values of weights and/or biases of the nodes of the encoder layers and decoder layers of the fingerprint generation neural network in order to reduce a value of the loss function, using gradient descent,

wherein the training inputs comprise the media content from which reference fingerprints are derived, and the expected outputs are identical to the respective training inputs.

4. The computer-implemented method of any one of claims 1 to 3, wherein:
the reference fingerprints in the database have been generated using the same trained fingerprint generation neural network as the generated fingerprint.

5. The computer-implemented method of any one of claims 1 to 4, wherein:
the database comprises a plurality of packages of reference fingerprints, each package comprising a subset of the reference fingerprints which are derived from media content corresponding a respective source.

6. The computer-implemented method of any one of claims 1 to 5, wherein determining whether the generated fingerprint meets the similarity criterion comprises:

determining a respective value of a distance metric or a similarity metric between the generated fingerprint and each of the reference fingerprints; and
in response to a determination that one or more of the values of the distance metric falls below a predetermined threshold or a determination that one or more of the values of the similarity metric exceeds a predetermined threshold, determining that the generated fingerprint meets the similarity criterion.

7. The computer-implemented method of claim 5, wherein determining whether the generated fingerprint meets the similarity criterion comprises:

applying a k-nearest neighbours algorithm to the generated fingerprint, the k-nearest neighbours algorithm configured to output k nearest neighbour reference fingerprints to the generated fingerprint, the k nearest neighbour reference fingerprints being the k reference fingerprints having the smallest distance from the generated fingerprint according to a predetermined distance metric;
determining to which package of reference fingerprints of the plurality of packages of reference fingerprints each of the k nearest neighbour reference fingerprints belongs; and
for each package:

determining a probability that the media content is similar to the media content in that package based on a proportion of the k nearest neighbour reference fingerprints which are determined to belong to that package;
determining whether the probability exceeds a respective predetermined threshold; and

in response a determination that the probability determined for one or more of the packages of reference fingerprints exceeds its respective predetermined threshold, determining that the similarity criterion is met.

8. The computer-implemented method of any one of claims 1 to 5, wherein determining whether the generated fingerprint meets the similarity criterion comprises:
applying a trained machine-learning model to the generated fingerprint, the trained machine-learning model configured to generate an output indicative of whether the similarity criterion is met.

9. The computer-implemented method of claim 8 dependent on claim 5, wherein:

the machine-learning model is configured to generate an output in the form of a vector comprising a plurality of values, each value of the plurality of values indicative of a likelihood or probability that the generated fingerprint is similar to one or more reference fingerprints in a respective package; and
determining whether the generated fingerprint meets the similarity criterion further comprises:

determining whether any of the values in the vector exceeds a respective predetermined threshold; and
in response to a determination that one or more of the values in the vector does exceeds its respective predetermined threshold, determining that the similarity criterion is met.

10. The computer-implemented method of claim 8 dependent on claim 5, wherein determining whether the generated fingerprint meets the similarity criterion comprises:
applying a plurality of package-specific machine-learning models to the generated fingerprint, each package-specific machine-learning model configured to generate an output indicative of whether the generated fingerprint is similar to any of the reference fingerprints within the respective package to which the package-specific machine-leaning model is specific.

11. The computer-implemented method of any one of claims 1 to 10, wherein:
the media content comprises image content, video content, or audio content.

12. The computer-implemented method of any one of claims 1 to 11, further comprising:
receiving an upload request comprising the media content, and an indication that a user or user device from which the upload request was received would like to upload the media content to an upload platform via which the media content will be publicly accessible.

13. The computer-implemented method of claim 12, wherein:
the upload platform is a social media platform, a file sharing platform or website, or a streaming service.

14. A system or platform for controlling upload of media content to an upload platform, the platform comprising:

a fingerprint generation module configured to generate a fingerprint based on received media content by applying a trained fingerprint generation neural network to the media content, the trained fingerprint generation neural network comprising:

an encoder configured to generate an embedding of the media content, the encoder comprising a plurality of encoder layers, each comprising a respective plurality of nodes taking respective values; and
one or more additional layers, the one or more additional layers comprising the embedding, each additional layer of the one or more additional layers comprising a respective plurality of nodes taking respective values, wherein the fingerprint comprises a vector comprising the values of a plurality of nodes from the one or more additional layers;

a similarity determination module configured to access a database of reference fingerprints, each reference fingerprint generated based on a respective item of media content; determining whether the generated fingerprint meets a similarity criterion, wherein meeting the similarity criterion is indicative of the generated fingerprint being similar to one or more of the reference fingerprints; and
an output module configured, in response to a determination that the generated fingerprint meets the similarity criterion, generate an alert and/or prevent upload of the media content to the upload platform.

15. A computer program or computer program product comprising instructions which, when the program is executed by a computer, cause the computer to execute a computer-implemented method of controlling the upload of media content, the computer-implemented method comprising:

generating a fingerprint, based on received media content, by applying a trained fingerprint generation neural network to the media content, the trained fingerprint generation neural network comprising:

an encoder configured to generate an embedding of the media content, the encoder comprising a plurality of encoder layers, each comprising a respective plurality of nodes taking respective values; and
one or more additional layers, the one or more additional layers comprising the embedding, each additional layer of the one or more additional layers comprising a respective plurality of nodes taking respective values, wherein the fingerprint comprises a vector comprising the values of a plurality of nodes from the one or more additional layers;

accessing a database of reference fingerprints, each reference fingerprint generated based on a respective item of media content;
determining whether the generated fingerprint meets a similarity criterion, wherein meeting the similarity criterion is indicative of the generated fingerprint being similar to one or more of the reference fingerprints; and
in response to a determination that the generated fingerprint meets the similarity criterion, generating an alert and/or preventing upload of the media content to an upload platform.

**User device 100**

**Memory 102**

Media content 1020

**Media content upload control platform 200**

User device interface module 202

**Processor 204**

Fingerprint generation module 2040

Similarity determination module 2042

Output module 2044

**Memory 206**

Fingerprint generation neural network 2060

Reference fingerprints database 2062

Similarity determination algorithm 2064

Generated fingerprint 2066

User device interface module 208

**Upload platform 400**

Media content source 300a

Media content source 300b

Media content source 300c

Media content source 300d

**FIG. I**

EP 4 764 892 A1

**S200**: Receive upload request content from user device.

**S202**: Generate fingerprint using fingerprint generation neural network.

**S204**: Is similarity criterion met?

No

Yes

**S206**: Upload media content to upload platform.

**S208**: Generate alert and/or prevent upload of media content to upload platform.

# FIG. 2

**FIG. 3**

**S400**: For each reference fingerprint, calculate value of distance metric from generated fingerprint.

**S402**: Is calculated distance metric below threshold?

**No**

**Yes**

**S404**: Determine that similarity criterion is <u>not</u> met.

**S406**: Determine that similarity criterion <u>is</u> met.

**FIG. 4**

**S500**: Apply *k*-nearest neighbour algorithm to identify *k* nearest neighbour reference fingerprints.

**S502**: Calculate probability that generated fingerprint belongs to each package of media content.

**S504**: Does probability exceed threshold?

No

Yes

**S506**: Determine that similarity criterion is <u>not</u> met.

**S508**: Determine that similarity criterion is met.

# FIG. 5

Europäisches
Patentamt
European
Patent Office
Office européen
des brevets

# EUROPEAN SEARCH REPORT

**Application Number**

EP 24 22 2265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/079367 A1 (9219 1568 QUEBEC INC [CA]) 11 May 2023 (2023-05-11) * abstract * * paragraphs [0024], [0042], [0071], [0080] * | 1-15 | INV. G06F16/435 G06F16/45 |
| X | US 2017/185675 A1 (ARNGREN TOMMY [SE]) 29 June 2017 (2017-06-29) * abstract * * paragraphs [0011], [0047] - [0056], [0171]; figure 6A * | 1-15 | |
| X | US 2019/028766 A1 (WOLD ERLING [US] ET AL) 24 January 2019 (2019-01-24) * abstract * * paragraphs [0021], [0025], [0033], [0053] * | 1-15 | |

**TECHNICAL FIELDS SEARCHED (IPC)**

G06F

The present search report has been drawn up for all claims

| Place of search | Date of completion of the search | Examiner |
|---|---|---|
| Berlin | 30 April 2025 | Siódmok, Wojciech |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## EP 4 764 892 A1

### ANNEX TO THE EUROPEAN SEARCH REPORT
### ON EUROPEAN PATENT APPLICATION NO.

EP 24 22 2265

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | Publication date | Patent family member(s) | | Publication date |
|---|---|---|---|---|
| WO 2023079367 A1 | 11-05-2023 | AU | 2022382076 A1 | 23-05-2024 |
| | | CA | 3237450 A1 | 11-05-2023 |
| | | CN | 118369928 A | 19-07-2024 |
| | | EP | 4430831 A1 | 18-09-2024 |
| | | JP | 2024542867 A | 15-11-2024 |
| | | KR | 20240096832 A | 26-06-2024 |
| | | US | 11417099 B1 | 16-08-2022 |
| | | US | 2023143574 A1 | 11-05-2023 |
| | | US | 2023410509 A1 | 21-12-2023 |
| | | WO | 2023079367 A1 | 11-05-2023 |
| US 2017185675 A1 | 29-06-2017 | EP | 3149652 A1 | 05-04-2017 |
| | | US | 2017185675 A1 | 29-06-2017 |
| | | WO | 2015183148 A1 | 03-12-2015 |
| US 2019028766 A1 | 24-01-2019 | EP | 3432162 A1 | 23-01-2019 |
| | | US | 2019028766 A1 | 24-01-2019 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BALLE, J** ; **LAPARRA, V** ; **SIMONCELLI, EP**. End-to-end optimized image compression. *International Conference on Learning Representations. arXiv:1611.01704*, April 2017

- **KAIMING HE** ; **XINLEI CHEN** ; **SAINING XIE** ; **YANGHAO LI** ; **PIOTR DOLLÁR** ; **ROSS GIRSHICK**. Masked Autoencoders Are Scalable Vision Learners. *Proceedings of the IEEE/CVF Conference on Computer Vision and Pattern Recognition (CVPR)*, 2022, 16000-16009